# EUROPEAN PATENT SPECIFICATION

(11) **EP 4 065 388 B1**
(45) Date of publication and mention of the grant of the patent: **20.03.2024**
(21) Application number: 19820892.8
(22) Date of filing: 27.11.2019
(51) Int. Cl.: B60C 11/13

(54) **A TREAD FOR IMPROVING WINTRY PERFORMANCE**
LAUFFLÄCHE ZUR VERBESSERUNG DER LEISTUNG IM WINTER
BANDE DE ROULEMENT POUR AMÉLIORER LES PERFORMANCES HIVERNALES

(43) Date of publication of application: 05.10.2022
(73) Proprietor: COMPAGNIE GENERALE DES ETABLISSEMENTS MICHELIN, 63000 Clermont-Ferrand (FR)
(72) Inventor: UCHIDA Tomotake, Tokyo 163-1073 (JP)
(74) Representative: M.F.P. Michelin
(86) International application number: PCT/JP2019/046347
(87) International publication number: WO 2021/106103

(56) References cited:
- EP-A1- 1 283 115
- WO-A1-2014/099847
- JP-A- H10 244 813
- US-A1- 2019 225 022

## Description

### [Technical Field]

The present invention relates to a tread for a tire, in particular to a tread for a tire for improving snow performance and ice performance at the same time.

### [Background Art]

In recent years, a tire so-called "all-season" tire which has capability to drive on wintry surface while maintaining high speed driving capability on non-wintry surface is beginning to popularize.

Also to a tire so-called "studless" tire which is suitable for driving on ice covered and/or snow covered wintry surface, there is a desire to increase performance on non-wintry surface that is not covered by ice nor snow while still improving performance on wintry surface

In order to increase performance on wintry surface especially snow performance, it is known to increase locally contact pressure enabling a tread digging into snow surface is effective. It is also known that such the way impacts negatively ice performance, as this way often the case decreases area of the tread contacting with road surface.

JP07101209 discloses a pneumatic tire provided with a plurality of blocks having a circumferential length of 30 to 50mm, a radius of curvature of each the block Rb is made smaller than a tire outline radius Ra in a range of 0.15 ≦ Ra/Rb ≦ 0.60 on a tire circumferential cross section for improving irregular wear resistance and noise performance.

WO2004011282 discloses a pneumatic tire provided with blocks on a tread, the blocks being provided with, on their contact face, a first arcuate portion having a center of curvature at inner side of the tire and a second arcuate portion having a center of curvature at exterior side of the tire on leading edge side and on trailing edge side of the blocks for improving irregular wear resistance.

JP10244813 discloses a pneumatic tire provided with blocks on a tread, the blocks being divided into sub-blocks via sipe, and an outline of a contact face of the sub blocks is formed to have smaller radius of curvature than a radius of curvature of an outline of the tread for improving ice performance while maintaining snow performance.

WO2014099847 A1 dislcoses a tire having a circumferential tread which includes a plurality of tread elements. At least one tread element has a sipe disposed therein. The sipe is defined by a first sipe wall, a second sipe wall, and a curved sipe surface extending from the first sipe wall to a top surface of the at least one tread element.

### [Citation List]

### [Patent Literature]

[PTL 1]
   JP07101209
[PTL 2]
   WO2004011282
[PTL 3]
   JP10244813
[PTL 4]
   WO2014099847 A1

However with the solutions disclosed in these documents, improvement on snow performance is not satisfactory. Also at the same time, degradation of ice performance is not an acceptable level. Thus there is a desire to further improvement on snow performance and on ice performance at the same time.

Therefore, there is a need for a tread for a tire which provides improvement on ice performance while maintaining good level on snow performance.

### Definitions:

A "radial direction/orientation" is a direction/orientation perpendicular to axis of rotation of the tire. This direction/orientation corresponds to thickness orientation of the tread.

An "axial direction/orientation" is a direction/orientation parallel to axis of rotation of the tire.

A "circumferential direction/orientation" is a direction/orientation which is tangential to any circle centered on axis of rotation. This direction/orientation is perpendicular to both the axial direction/orientation and the radial direction/orientation

A "tire" means all types of elastic tire whether or not subjected to an internal pressure.

A "tread" of a tire means a quantity of rubber material bounded by lateral surfaces and by two main surfaces one of which is intended to come into contact with ground when the tire is rolling.

A "groove" is a space between two rubber faces/sidewalls which do not contact between themselves under usual rolling condition connected by another rubber face/ bottom. A groove has a width and a depth.

An "incision", also referred to as a "sipe" is a narrow cutout formed toward radially inwardly from a surface of a tread made by, for example a thin blade having a shape like a knife blade. A width of the incision at the surface of the tread is narrower than a groove, for example less than or equal to 2.0mm. This incision may, different from the groove, be partly or completely closed when such the incision is in a contact patch and under usual rolling condition.

A "contact patch" is a footprint of a tire mounted onto its standard rim as identified in tire standards such as ETRTO, JATMA or TRA, and inflated at its nominal pressure and under its nominal load. A "width TW" of a contact face is a maximum contact width of the contact patch along with an axis of rotation of the tire.

It is thus an object of the invention to provide a tread for a tire which provides improvement on ice performance while maintaining good level on snow performance.

### [Summary of Invention]

The present invention provides a tread for a tire having a contact face intended to come into contact with ground during rolling, the tread being provided with a plurality of grooves of a depth D extending in an orientation having a non-zero angle A relative to circumferential orientation and opening to the contact face, at least two circumferentially adjacent grooves of the plurality of grooves delimiting a contact element, the contact element having at least one incision opening to the contact face and extending in an orientation substantially parallel to the orientation in which the closest plurality of grooves being extending and radially inward orientation, the contact element being delimited into at least two sub-contact elements via the plurality of grooves and the at least one incision, on a plane perpendicular to the orientation in which the plurality of grooves being extending and to the contact face, each the at least one of the at least two sub-contact elements having a length Ls between two frontal faces, a first frontal face and a second frontal face of the at least two sub-contact elements, an outermost portion of each the sub-contact element constituting a part of the contact face intersecting with the first frontal face at a first edge and with the second frontal face at a second edge, the first edge having a radial height H1 and the second edge having a radial height H2 both from a bottom of the groove, the tread having an outline OL of a radius Rt at an intersection IS between the outline OL and the outermost portion, the outermost portion comprises two portions, a first portion including the first edge and a second portion including the second edge, the first portion has a first radius Rs and the second portion has a second radius Rg, the first radius Rs is smaller than the second radius Rg, the tread being characterized in that the first radius Rs is from 20% to 50% of the length Ls.

This arrangement provides an improvement on ice performance while maintaining good level on snow performance.

Since the outermost portion comprises two portions, a first portion including the first edge and a second portion including the second edge, and the first portion has a first radius Rs and the second portion has a second radius Rg, and the first radius Rs is smaller than the second radius Rg, on a surface for which a friction coefficient is sufficiently high to deform the sub-contact elements as snow covered surface, the first portion with the first radius Rs which has smaller radius than the second portion with the second radius Rg contacts with ground and contact of the outermost portion decreases thus increasing a contact pressure which enables the sub-contact elements digging into snow surface deeper. Therefore it is possible to maintain good snow performance.

On a surface for which a friction coefficient is insufficient to deform the sub-contact elements as ice covered surface, the second portion with the second radius Rg which has greater radius than the first portion with the first radius Rs contacts with ground while increasing contacting with ground. Therefore it is possible to improve ice performance.

According to the present invention, the first radius Rs is from 20% to 50% of the length Ls.

If the first radius Rs is smaller than 20% of the length Ls, there is a risk that maintenance of good on snow performance by the first portion with the first radius Rs becomes insufficient due to reduced portion within the outermost portion which can function to decrease the contact with ground, then the second portion with the second radius Rg becomes dominant to contact with ground. If the first radius Rs is greater than 50% of the length Ls, there is a risk that maintenance of good on snow performance by the first portion with the first radius Rs becomes insufficient also due to increased contact which decreases the contact pressure. By setting the first radius Rs from 20% to 50% of the length Ls, it is possible to improve on ice performance while maintaining good on snow performance.

The first radius Rs is preferably from 25% to 45% of the length Ls, more preferably from 30% to 40% of the length Ls.

In another preferred embodiment, the second radius Rg is from 150% to 500% of the length Ls.

If the second radius Rg is smaller than 150% of the length Ls, there is a risk that increase of contact with ground by the second portion with the second radius Rg on the surface for which the friction coefficient is insufficient to deform the sub-contact elements becomes insufficient. If the second radius Rg is greater than 500% of the length Ls, there is a risk that the second portion with the second radius Rg becomes dominant to contact with ground even on the surface for which the friction coefficient is sufficiently high to deform the sub-contact elements thus contact with snow surface increases. By setting the second radius Rg from 150% to 500% of the length Ls, it is possible to improve on ice performance while maintaining good on snow performance.

The second radius Rg is preferably from 150% to 450% of the length Ls, more preferably from 180% to 400% of the length Ls and still more preferably from 200% to 300% of the length Ls.

In another preferred embodiment, the radial height H1 of the first edge is greater than or equal to the radial height H2 of the second edge.

If the radial height H1 of the first edge is smaller than the radial height H2 of the second edge, there is a risk of on snow performance degradation as the second portion with the second radius Rg becomes dominant to contact with ground even on the surface for which the friction coefficient is sufficiently high to deform the sub-contact elements. By setting the radial height H1 of the first edge is greater than or equal to the radial height H2 of the second edge, it is possible to improve on ice performance while maintaining good on snow performance.

In another preferred embodiment, the first portion and the second portion intersect at the intersection IS between the outline OL and the outermost portion.

According to this arrangement, it is possible to connect smoothly the first portion and the second portion on the uppermost portion thus possible to improve aesthetic of the sub-contact elements.

In another preferred embodiment, the first edge is facing to circumferentially closest plurality of grooves.

According to this arrangement, it is possible for the contact element to improve on ice performance while maintaining good on snow performance regardless of tire rotation direction.

In another preferred embodiment, the tread has an intended direction of rotation, and the first edge is facing to a trailing side of the sub-contact element with respect to the intended direction of rotation of the tread.

According to this arrangement, it is possible for the contact element to improve efficiently on ice performance while maintaining good on snow performance.

In another preferred embodiment, the non-zero angle A relative to circumferential orientation is greater than or equal to 30°.

If the non-zero angle A relative to circumferential orientation is smaller than 30°, there is a risk of insufficient snow performance maintenance because an area generating increased contact pressure in a contact patch decreases due to the non-zero angle A which is equal or similar to an angle extending the contact element. By setting the non-zero angle A relative to circumferential orientation is greater than or equal to 30°, it is possible to improve on ice performance while maintaining good on snow performance.

### [Advantageous Effects of Invention]

According to the arrangements described above, it is possible to provide a tread for a tire which provides improvement on ice performance while maintaining good on snow performance.

### [Brief Description of Drawings]

Other characteristics and advantages of the invention arise from the description made hereafter in reference to the annexed drawings which show, as nonrestrictive examples, the embodiment of the invention.

In these drawings:
[Fig. 1]

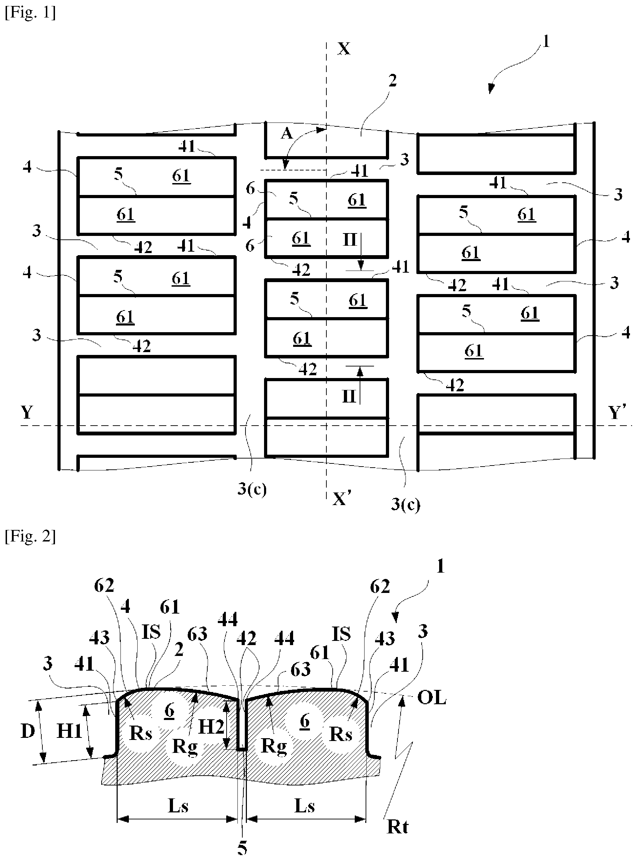

   Fig. 1 is a schematic plan view of a tread according to a first embodiment of the present invention;
[Fig. 2]
   Fig. 2 is a schematic cross sectional view taken along line II-II in Fig. 1;
[Fig. 3]

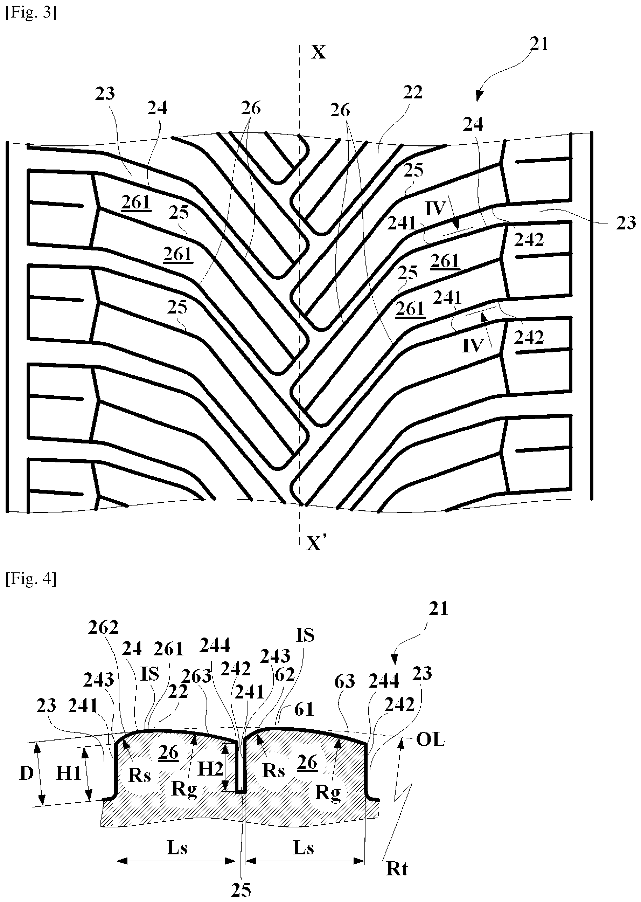

   Fig. 3 is a schematic plan view of a tread according to a second embodiment of the present invention;
[Fig. 4]
   Fig. 4 is a schematic cross sectional view taken along line IV-IV in Fig. 3;
[Fig. 5]

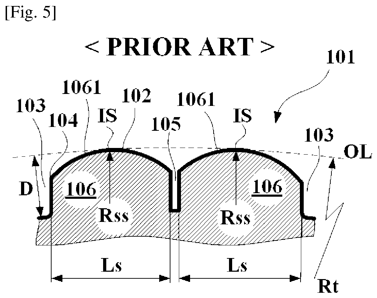

   Fig. 5 is a schematic cross sectional view of a tread according to prior art.

### [Description of Embodiments]

Preferred embodiments of the present invention will be described below referring to the drawings.

A tread 1 for a tire according to a first embodiment of the present invention will be described referring to Figs. 1 and 2. Fig. 1 is a schematic plan view of a tread according to a first embodiment of the present invention. Fig. 2 is a schematic cross sectional view taken along line II-II in Fig. 1.

The tread 1 is a tread for a tire having dimension 225/45R17 and comprises a contact face 2 intended to come into contact with the ground during rolling, and a plurality of grooves 3 of a depth D (shown in Fig. 2) extending in an orientation having a non-zero angle A relative to circumferential orientation as indicated by line XX' and opening to the contact face 2. The tread 1 also comprising 2 circumferential grooves 3(c) opening to the contact face 2 and extending along circumferential orientation. The tread 1 comprising a contact element 4 being delimited via at least two circumferentially adjacent grooves 3 of the plurality of grooves 3 and the circumferential groove 3(c) and/or an axial extremity of the tread 1. In this first embodiment, the depth D is 8.0 mm, and the non-zero angle A is 90° which is equal to axial orientation as indicated by line YY'.

As shown in Fig. 1, the contact element 4 having at least one incision 5 opening to the contact face 2 and extending in an orientation substantially parallel to the orientation in which the closest plurality of grooves 3 being extending and radially inward orientation, the contact element 4 being delimited into at least two sub-contact elements 6 via the plurality of grooves 3 and the at least one incision 5. In this first embodiment, the contact element 4 is delimited into two sub-contact elements 6.

The at least one incision 5 is extending in the orientation substantially parallel to the orientation in which the closest plurality of grooves 3 being extending, means that the at least one incision 5 is extending in the orientation within 20° relative to the orientation in which the closest plurality of grooves 3 being extending.

As shown in Figs. 1 and 2, on a plane perpendicular to the orientation in which the plurality of grooves 3 being extending and to the contact face 2, each the at least one of the at least two sub-contact elements 6 having a length Ls between two frontal faces, a first frontal face 41 and a second frontal face 42 of the at least two sub-contact elements 6, an outermost portion 61 of each the sub-contact element 6 constituting a part of the contact face 2 intersecting with the first frontal face 41 at a first edge 43 and with the second frontal face 42 at a second edge 44, the first edge 43 having a radial height H1 and the second edge 44 having a radial height H2 both from a bottom of the groove 3, the tread 1 having an outline OL of a radius Rt at an intersection IS between the outline OL and the outermost portion 61. The outermost portion 61 comprises two portions, a first portion 62 including the first edge 43 and a second portion 63 including the second edge 44, the first portion 62 has a first radius Rs and the second portion 63 has a second radius Rg, and the first radius Rs is smaller than the second radius Rg. The first radius Rs of the first portion 62 is from 20% to 50% of the length Ls of the sub-contact elements 6, and the second radius Rg of the second portion 63 is from 150% to 500% of the length Ls of the sub-contact elements 6. In this first embodiment, the length Ls of the sub-contact element 6 is 8.5 mm, the first radius Rs of the first portion 62 is 3.0 mm thus 35% of the length Ls, the second radius Rg of the second portion 63 is 20.0 mm thus 235% of the length Ls, and the incision 5 has the same depth as the groove 3 measured from the outline OL.

As shown in Fig. 2, the radial height H1 of the first edge 43 is greater than or equal to the radial height H2 of the second edge 44. The first portion 62 and the second portion 63 intersect at the intersection IS between the outline OL and the outermost portion 61. The first edge 43 of each the sub-contact element 6 is facing to circumferentially closest plurality of grooves 3. In this first embodiment, the radial height H1 of the first edge 43 is 7.2 mm, the radial height H2 of the second edge 44 is 6.4 mm.

Since the outermost portion 61 comprises two portions, a first portion 62 including the first edge 43 and a second portion 63 including the second edge 44, and the first portion 62 has a first radius Rs and the second portion 63 has a second radius Rg, and the first radius Rs is smaller than the second radius Rg, on a surface for which a friction coefficient is sufficiently high to deform the sub-contact elements 6 as snow covered surface, the first portion 62 with the first radius Rs which has smaller radius than the second portion 63 with the second radius Rg contacts with ground and contact of the outermost portion 61 decreases thus increasing a contact pressure which enables the sub-contact elements 6 digging into snow surface deeper. Therefore it is possible to maintain good snow performance.

On a surface for which a friction coefficient is insufficient to deform the sub-contact elements 6 as ice covered surface, the second portion 63 with the second radius Rg which has greater radius than the first portion 62 with the first radius Rs contacts with ground while increasing contacting with ground. Therefore it is possible to improve ice performance.

Since the first radius Rs is from 20% to 50% of the length Ls, it is possible to improve on ice performance while maintaining good on snow performance.

If the first radius Rs is smaller than 20% of the length Ls, there is a risk that maintenance of good on snow performance by the first portion 62 with the first radius Rs becomes insufficient due to reduced portion within the outermost portion 61 which can function to decrease the contact with ground, then the second portion 63 with the second radius Rg becomes dominant to contact with ground. If the first radius Rs is greater than 50% of the length Ls, there is a risk that maintenance of good on snow performance by the first portion 62 with the first radius Rs becomes insufficient also due to increased contact which decreases the contact pressure.

The first radius Rs is preferably from 25% to 45% of the length Ls, more preferably from 30% to 40% of the length Ls.

Since the second radius Rg is from 150% to 500% of the length Ls, it is possible to improve on ice performance while maintaining good on snow performance.

If the second radius Rg is smaller than 150% of the length Ls, there is a risk that increase of contact with ground by the second portion 63 with the second radius Rg on the surface for which the friction coefficient is insufficient to deform the sub-contact elements 6 becomes insufficient. If the second radius Rg is greater than 500% of the length Ls, including a straight line, there is a risk that the second portion 63 with the second radius Rg becomes dominant to contact with ground even on the surface for which the friction coefficient is sufficiently high to deform the sub-contact elements 6 thus contact with snow surface increases.

The second radius Rg is preferably from 150% to 450% of the length Ls, more preferably from 180% to 400% of the length Ls and still more preferably from 200% to 300% of the length Ls.

Since the radial height H1 of the first edge 43 is greater than or equal to the radial height H2 of the second edge 44, it is possible to improve on ice performance while maintaining good on snow performance.

If the radial height H1 of the first edge 43 is smaller than the radial height H2 of the second edge 44, there is a risk of on snow performance degradation as the second portion 63 with the second radius Rg becomes dominant to contact with ground even on the surface for which the friction coefficient is sufficiently high to deform the sub-contact elements 6.

Since the first portion 62 and the second portion 63 intersect at the intersection IS between the outline OL and the outermost portion 61, it is possible to connect smoothly the first portion 62 and the second portion 63 on the uppermost portion 61 thus possible to improve aesthetic of the sub-contact elements 6.

Since the first edge 43 is facing to circumferentially closest plurality of grooves 3, it is possible for the contact element 4 to improve on ice performance while maintaining good on snow performance regardless of tire rotation direction.

Since the non-zero angle A relative to circumferential orientation is greater than or equal to 30°, it is possible to improve on ice performance while maintaining good on snow performance.

If the non-zero angle A relative to circumferential orientation is smaller than 30°, there is a risk of insufficient snow performance maintenance because an area generating increased contact pressure in a contact patch decreases due to the non-zero angle A which is equal or similar to an angle extending the contact element.

The grooves 3 and/or incision 5 may be provided in a shape of straight, curved, zig-zagged or combination of these shapes, in plan view and/or in cut view of the tread 1.

The length Ls of each the sub-contact element 6 in the same contact element 4 may vary from one another.

The sub-contact elements 6 may be provided to whole the contact element 4, to the contact element 4 in a specific rib divided by the circumferential grooves 3(c) and/or the axial extremity of the tread 1, or to the specific contact element 4 only.

A tread 21 according to a second embodiment of the present invention will be described referring to Figs. 3 and 4. Fig. 3 is a schematic plan view of a tread according to a second embodiment of the present invention. Fig. 4 is a schematic cross sectional view taken along line IV-IV in Fig. 3. The construction of this second embodiment is similar to that of the first embodiment other than the arrangement shown in Figs. 3 and 4, thus description will be made referring to Figs. 3 and 4.

As shown in Fig. 3, the tread 21 comprises a contact face 22 intended to come into contact with the ground during rolling, and a plurality of grooves 23 of a depth D (shown in Fig. 4) extending in an orientation having a non-zero angle A relative to circumferential orientation as indicated by line XX' and opening to the contact face 22. The tread 21 comprising a contact element 24 being delimited via at least two circumferentially adjacent grooves 23 of the plurality of grooves 23. The tread 21 has an intended direction of rotation that is from top to bottom direction in this Fig. 3. In this second embodiment, the depth D is 8.0 mm, and the non-zero angle A varies between 30° to 88° as to make the contact element 24 extending obliquely against circumferential orientation.

As shown in Fig. 3, the contact element 24 having at least one incision 25 opening to the contact face 22 and extending in an orientation substantially parallel to the orientation in which the closest plurality of grooves 23 being extending and radially inward orientation, the contact element 24 being delimited into at least two sub-contact elements 26 via the plurality of grooves 23 and the at least one incision 25. An outermost portion 261 of each the sub-contact element 26 is constituting a part of the contact face 22. Each the sub-contact element 26 having a length Ls (not shown) between two frontal faces, a first frontal face 241 and a second frontal face 242. In this second embodiment, the contact element 24 is delimited into two sub-contact elements 26.

As shown in Fig. 3, the tread 21 comprises a contact face 22 intended to come into contact with the ground during rolling, and a plurality of grooves 23 of a depth D (shown in Fig. 4). The tread 21 comprising a contact element 24 being delimited via two circumferentially adjacent grooves 23 of the plurality of grooves 23.

As shown in Fig. 3, the contact element 24 having at least one incision 25 opening to the contact face 22 and extending in radially inward orientation, the contact element 24 being delimited into at least two sub-contact elements 26 via the plurality of grooves 23 and the at least one incision 25. In this second embodiment, the contact element 24 is delimited into three sub-contact elements 26 via the two incisions 25.

As shown in Figs. 3 and 4, on a plane perpendicular to the orientation in which the plurality of grooves 23 being extending and to the contact face 22, each the at least one of the at least two sub-contact elements 26 having a length Ls between two frontal faces, a first frontal face 241 and a second frontal face 242 of the at least two sub-contact elements 26, an outermost portion 261 of each the sub-contact element 26 constituting a part of the contact face 22 intersecting with the first frontal face 241 at a first edge 243 and with the second frontal face 242 at a second edge 244, the first edge 243 having a radial height H1 and the second edge 244 having a radial height H2 both from a bottom of the groove 23, the tread 21 having an outline OL of a radius Rt at an intersection IS between the outline OL and the outermost portion 261. The outermost portion 261 comprises two portions, a first portion 262 including the first edge 243 and a second portion 263 including the second edge 244, the first portion 262 has a first radius Rs and the second portion 263 has a second radius Rg, and the first radius Rs is smaller than the second radius Rg.

As shown in Fig. 4, the radial height H1 of the first edge 243 is greater than or equal to the radial height H2 of the second edge 244. The tread 21 has the intended direction of rotation corresponding to as explained in Fig. 3 which is from left to right direction in this Fig. 4 thus the second edge 244 becomes a leading edge and the first edge 243 becomes a trailing edge. The first edge 243 of each the sub-contact element 26 is facing to a trailing side of the sub-contact element 26 with respect to the intended direction of rotation of the tread 21.

Since the tread 21 has an intended direction of rotation, and the first edge 243 is facing to a trailing side of the sub-contact element 26 with respect to the intended direction of rotation of the tread 21, it is possible for the contact element 24 to improve efficiently on ice performance while maintaining good on snow performance.

In case applying the present invention to the tread like this second embodiment, a portion containing a radius Rs (not shown) on the outermost portion 261 of the sub-contact element 26 may be provided on whole the sub-contact elements 26, partly in one of the sub-contact elements 26. Different the first radius Rs and the second radius Rg may be combined within one single sub-contact element 26, or the first radius Rs and/or the second radius Rg varies along with the orientation in which the contact element 24, the groove 23, the incision 25 or the sub-contact element 26 is extending.

The invention is not limited to the examples described and represented but only by the appended claims.

Fig. 5 is a schematic cross sectional view of a tread according to prior art. In this Fig. 5, the tread 101 having a contact face 102 intended to come into contact with ground during rolling being provided with a plurality of grooves 103 of a depth D extending in an orientation having a non-zero angle A (not shown) with circumferential orientation and opening to the contact face 102, at least two circumferentially adjacent grooves of the plurality of grooves 103 delimiting a contact element 104 having an incision 105 opening to the contact face 102 and extending in an orientation substantially parallel to the orientation in which the closest plurality of grooves 103 being extending (now shown) and radially inward orientation, the contact element 104 being delimited into two sub-contact elements 106 via the plurality of grooves 103 and the incision 105, on a plane perpendicular to the orientation in which the plurality of grooves 103 being extending and to the contact face 102, each the sub-contact element 106 having a length Ls between two frontal faces, an outermost portion 1061 of each the sub-contact element 106 constituting a part of the contact face 102, the tread 101 having an outline OL of a radius Rt at an intersection IS between the outline OL and the outermost portion 1061, the outermost portion 1061 of each the sub-contact element 106 having a single radius Rss. In this present prior art, the single radius Rss of the outermost portion 1061 of the sub-contact element 106 is 4.0 mm, and the radius Rt of the outline OL is 350.0 mm.

### [Examples]

In order to confirm the effect of the present invention, one type of block sample of Example to which the present invention is applied and other type of block sample of Reference were prepared.

The Example was a block sample similar to as described in the above the second embodiment; the block sample (= the contact element) having one incision, by the incision the block sample is divided into 2 sub-contact elements, a height of the contact element (= depth D of the plurality of grooves) equals to 8.0 mm, the angle A equals to 90 degrees, the length Ls of each the sub-contact element equals to 8.5 mm, the first radius Rs of the outermost portion equals to 3.0 mm and the second radius Rg of the outermost portion equals to 20.0 mm, the height H1 of the first edge equals to 6.8 mm and the height H2 of the second edge equals to 6.0 mm. The first edge of each the sub-contact element was facing to the same orientation in which the block sample would be sliding to. The Reference was a block sample as described in the above prior art. Both the Example and Reference had the same radius Rt of 350.0 mm and were made of the same rubber material.

### Snow performance tests:

The friction coefficient measurement on snow were carried out with the above Example and Reference sliding at a given condition (a displacement: 0 to 0.03 m, a speed: 0 to 0.5 m/s, and an acceleration: 5 m/s2) over a hard pack snow track, set at about -10°C with a CTI penetrometer reading of about 90 in accordance with Standard ASTM F1805, with an imposed normal stress (about 300 kPa). The forces generated in a direction of travel (Fx) of each of the Example and Reference and in another direction perpendicular to the travel (Fz) were measured. The Fx/Fz ratio determines the friction coefficient of each of the Examples, Comparative Examples and Reference on the snow. This test, the principle of which is well known to a person skilled in the art (see, for example, an article entitled "Investigation of rubber friction on snow for tires" written by Sam Ella, Pierre-Yves Formagne, Vasileios Koutsos and Jane R. Blackford (38th LEEDS-Lyons Symposium on tribology, Lyons, 6-9 Sep. 2011)) makes it possible to evaluate, under representative conditions, the grip on snow which would be obtained after a running test on a vehicle fitted with tires whose tread is composed of the same contact elements.

The results are shown in table 1. In this table 1, results are represented by an index of 100 for Reference, higher the number indicates better the performance. Within 4 points difference on this comparison could be considered as equivalent.

### Ice performance tests:

The friction coefficient measurement on ice were carried out with the above Example and Reference sliding at a given condition (a load: for example 3 kg/cm2, a speed: 5 km/h) in a direction of travel of each of the Example and Reference were measured. A force generated during sliding in the direction of sliding (Fx) and a force generated during sliding in the direction perpendicular to the direction of sliding (Fz) were measured, and the friction coefficient was obtained from Fx/Fz. The temperature of the ice surface during measurement was set to -2°C.

The results are also shown in table 1. In this table 1, results are represented by an index of 100 for Reference, higher the number indicates better the performance.

**[Table 1]**

| | Example | Reference |
|---|---|---|
| Radius Rs / Rg (mm) | 3.0 / 20.0 | 4.0 (Radius Rss) |
| Snow performance (index) | 97 | 100 |
| Ice performance (index) | 108 | 100 |

As seen from table 1, the Example shows improvement on ice performance while maintaining good level on snow performance already achieved by prior art, which cannot be achieved by treads disclosed in prior arts.

### [Reference Signs List]

- 1, 21: tread
- 2, 22: contact face
- 3, 23: groove
- 4, 24: contact element
- 41, 241: first frontal face
- 42, 242: second frontal face
- 43, 243: first edge
- 44, 244: second edge
- 5, 25: incision
- 6, 26: sub-contact element
- 61, 261: outermost portion
- 62, 262: first portion
- 63, 263: second portion

## Claims

1. A tread (1) for a tire having a contact face (2) intended to come into contact with ground during rolling, the tread (1) being provided with a plurality of grooves (3) of a depth D extending in an orientation having a non-zero angle A relative to circumferential orientation and opening to the contact face (2),
at least two circumferentially adjacent grooves of the plurality of grooves (3) delimiting a contact element (4),
the contact element (4) having at least one incision (5) opening to the contact face (2) and extending in an orientation substantially parallel to the orientation in which the closest plurality of grooves (3) being extending and radially inward orientation, the contact element (4) being delimited into at least two sub-contact elements (6) via the plurality of grooves (3) and the at least one incision (5),
on a plane perpendicular to the orientation in which the plurality of grooves (3) being extending and to the contact face (2), each the at least one of the at least two sub-contact elements (6) having a length Ls between two frontal faces, a first frontal face (41) and a second frontal face (42) of the at least two sub-contact elements (6), an outermost portion (61) of each the sub-contact element (6) constituting a part of the contact face (2) intersecting with the first frontal face (41) at a first edge (43) and with the second frontal face (42) at a second edge (44), the first edge (43) having a radial height H1 and the second edge (44) having a radial height H2 both from a bottom of the groove (3), the tread (1) having an outline OL of a radius Rt at an intersection IS between the outline OL and the outermost portion (61), the outermost portion (61) comprising two portions, a first portion (62) including the first edge (43) and a second portion (63) including the second edge (44), the first portion (62) having a first radius Rs and the second portion (63) having a second radius Rg, the first radius Rs being smaller than the second radius Rg
the tread being **characterized in that** the first radius Rs is from 20% to 50% of the length Ls.

2. The tread (1) according to Claim 1, **wherein** the second radius Rg is from 150% to 500% of the length Ls.

3. The tread (1) according to Claim 1 or Claim 2, **wherein** the radial height H1 of the first edge (43) is greater than or equal to the radial height H2 of the second edge (44).

4. The tread (1) according to any one of the Claims 1 to 3, **wherein** the first portion (62) and the second portion (63) intersect at the intersection IS between the outline OL and the outermost portion (61).

5. The tread (1) according to any one of the Claims 1 to 4, **wherein** the first edge (43) is facing to circumferentially closest plurality of grooves (3).

6. The tread (1) according to any one of the Claims 1 to 4, **wherein** the tread (1) has an intended direction of rotation, and **wherein** the first edge (43) is facing to a trailing side of the sub-contact element (6) with respect to the intended direction of rotation of the tread (1).

7. The tread (1) according to any one of the Claims 1 to 6, **wherein** the non-zero angle A relative to circumferential orientation is greater than or equal to 30°.

8. A tire having a tread according to any one of the Claims 1 to 7.

## Patentansprüche

1. Laufstreifen (1) für einen Reifen mit einer Kontaktfläche (2), die während des Rollens mit dem Boden in Kontakt kommen soll, wobei der Laufstreifen (1) mit einer Vielzahl von Nuten (3) mit einer Tiefe D versehen ist, die sich in einer Ausrichtung mit einem von Null verschiedenen Winkel A bezüglich der Umfangsrichtung erstrecken und zu der Kontaktfläche (2) öffnen,
wobei mindestens zwei umfangsmäßig benachbarte Nuten der Vielzahl von Nuten (3) ein Kontaktelement (4) begrenzen,
wobei das Kontaktelement (4) mindestens einen Einschnitt (5) hat, der sich zu der Kontaktfläche (2) öffnet und in einer Ausrichtung erstreckt, die im Wesentlichen parallel zu der Ausrichtung verläuft, in der sich die nächstliegende Vielzahl von Nuten (3) erstrecken, sowie in einer radial nach innen gehenden Ausrichtung, wobei das Kontaktelement (4) über die Vielzahl von Nuten (3) und den mindestens einen Einschnitt (5) in mindestens zwei Unterkontaktelemente (6) unterteilt ist, auf einer senkrecht zu der Ausrichtung, in der sich die nächstliegende Vielzahl von Nuten (3) erstrecken, und zu der Kontaktfläche (2) verlaufenden Ebene, wobei jedes des mindestens einen der mindestens zwei Unterkontaktelemente (6) eine Länge Ls zwischen zwei Vorderflächen, einer ersten Vorderfläche (41) und einer zweiten Vorderfläche (42), der mindestens zwei Unterkontaktelemente (6) hat, wobei sich ein äußerster Abschnitt (61) jedes Unterkontakelements (6), das einen Teil der Kontaktfläche (2) ausmacht, mit der ersten Vorderfläche (41) an einem ersten Rand (43) und mit der zweiten Vorderfläche (42) an einem zweiten Rand (44) kreuzt, wobei der erste Rand (43) eine radiale Höhe H1 hat und der zweite Rand (44) eine radiale Höhe H2 hat, und zwar jeweils von einem Boden der Nut (3), wobei der Laufstreifen (1) eine Kante OL mit einem Radius Rt an einer Kreuzung IS zwischen der Kante OL und dem äußersten Abschnitt (61) hat, wobei der äußerste Abschnitt (61) zwei Abschnitte umfasst, und zwar einen ersten Abschnitt (62), der einen ersten Rand (43) aufweist, und einen zweiten Abschnitt (63), der einen zweiten Rand (44) aufweist, wobei der erste Abschnitt (62) einen ersten Radius Rs hat und der zweite Abschnitt (63) einen zweiten Radius Rg hat, wobei der erste Radius Rs kleiner als der zweite Radius Rg ist,
**dadurch gekennzeichnet, dass** der erste Radius Rs 20% bis 50% der Länge Ls beträgt.

2. Laufstreifen (1) nach Anspruch 1, wobei der zweite Radius Rg 150% bis 500% der Länge Ls beträgt.

3. Laufstreifen (1) nach Anspruch 1 oder Anspruch 2, wobei die radiale Höhe H1 des ersten Rands (43) größer oder gleich der radialen Höhe H2 des zweiten Rands (44) ist.

4. Laufstreifen (1) nach einem der Ansprüche 1 bis 3, wobei sich der erste Abschnitt (62) und der zweite Abschnitt (63) an der Kreuzung IS zwischen der Kante OL und dem äußersten Abschnitt (61) kreuzen.

5. Laufstreifen (1) nach einem der Ansprüche 1 bis 4, wobei der erste Rand (43) der umfangsmäßig nächstliegenden Vielzahl von Nuten (3) zugewandt ist.

6. Laufstreifen (1) nach einem der vorhergehenden Ansprüche 1 bis 4, wobei der Laufstreifen (1) eine Solldrehrichtung hat und wobei der erste Rand (43) einer hinteren Seite des Unterkontaktelements (6) bezüglich der Solldrehrichtung des Laufstreifens (1) zugewandt ist.

7. Laufstreifen (1) nach einem der Ansprüche 1 bis 6, wobei der von Null verschiedene Winkel A bezüglich der Umfangsausrichtung gröer oder gleich 30° ist.

8. Reifen mit einem Laufstreifen nach einem der Ansprüche 1 bis 7.

## Revendications

1. Bande de roulement (1) pour un pneu ayant une face de contact (2) destinée à entrer en contact avec le sol pendant le roulement, la bande de roulement (1) étant pourvue d'une pluralité de rainures (3) d'une profondeur D s'étendant dans une orientation ayant un angle non nul A par rapport à l'orientation circonférentielle et s'ouvrant sur la face de contact (2),
au moins deux rainures circonférentiellement adjacentes de la pluralité de rainures (3) délimitant un élément de contact (4),
l'élément de contact (4) comportant au moins une incision (5) s'ouvrant sur la face de contact (2) et s'étendant dans une orientation sensiblement parallèle à l'orientation dans laquelle la pluralité de rainures (3) la plus proche s'étend et à une orientation radialement vers l'intérieur, l'élément de contact (4) étant délimité en au moins deux sous-éléments de contact (6) par l'intermédiaire de la pluralité de rainures (3) et de l'au moins une incision (5),
sur un plan perpendiculaire à l'orientation dans laquelle la pluralité de rainures (3) s'étend et à la face de contact (2), chacun de l'au moins un des au moins deux sous-éléments de contact (6) ayant une longueur Ls entre deux faces frontales, une première face frontale (41) et une seconde face frontale (42) des au moins deux sous-éléments de contact (6), une partie la plus extérieure (61) de chaque sous-élément de contact (6) constituant une partie de la face de contact (2) coupant la première face frontale (41) au niveau d'un premier bord (43) et la seconde face frontale (42) au niveau d'un second bord (44), le premier bord (43) ayant une hauteur radiale H1 et le second bord (44) ayant une hauteur radiale H2, tous deux à partir d'un fond de la rainure (3), la bande de roulement (1) ayant un contour OL d'un rayon Rt au niveau d'une intersection IS entre le contour OL et la partie la plus extérieure (61), la partie la plus extérieure (61) comprenant deux parties, une première partie (62) comprenant le premier bord (43) et une seconde partie (63) comprenant le second bord (44), la première partie (62) ayant un premier rayon Rs et la seconde partie (63) ayant un second rayon Rg, le premier rayon Rs étant plus petit que le second rayon Rg
la bande de roulement étant **caractérisée en ce que** le premier rayon Rs est compris entre 20 % et 50 % de la longueur Ls.

2. Bande de roulement (1) selon la revendication 1, le second rayon Rg étant compris entre 150 % et 500 % de la longueur Ls.

3. Bande de roulement (1) selon la revendication 1 ou la revendication 2, la hauteur radiale H1 du premier bord (43) étant supérieure ou égale à la hauteur radiale H2 du second bord (44).

4. Bande de roulement (1) selon l'une quelconque des revendications 1 à 3, la première partie (62) et la seconde partie (63) se coupant au niveau de l'intersection IS entre le contour OL et la partie la plus extérieure (61).

5. Bande de roulement (1) selon l'une quelconque des revendications 1 à 4, le premier bord (43) étant face à la pluralité de rainures (3) circonférentiellement la plus proche.

6. Bande de roulement (1) selon l'une quelconque des revendications 1 à 4, la bande de roulement (1) ayant un sens de rotation prévu, et le premier bord (43) faisant face à un côté arrière du sous-élément de contact (6) par rapport au sens de rotation prévu de la bande de roulement (1) .

7. Bande de roulement (1) selon l'une quelconque des revendications 1 à 6, l'angle non nul A par rapport à l'orientation circonférentielle étant supérieur ou égal à 30 °.

8. Pneu ayant une bande de roulement selon l'une quelconque des revendications 1 à 7.
